# EUROPEAN PATENT APPLICATION

(11) **EP 1 398 654 A2**
(43) Date of publication of application: **17.03.2004**
(21) Application number: 03010413.7
(22) Date of filing: 08.05.2003
(51) Int. Cl.: G02B 6/16, C03C 25/10

(54) **Foamed optical fiber coating and method of manufacture**

(30) Priority: 13.09.2002 US 243131
(71) Applicant: FITEL USA CORPORATION (a Delaware Corporation), Norcross, Georgia 30071 (US)
(72) Inventor: Aloisio, Charles, J., Atlanta, GA 30307 (US); Harper, Daniel, Kennesaw, GA 30152 (US); Siddiqui, Shahabuddin, Lawrenceville, GA 30044 (US); Turnipseed, John, M., Lilburn, GA 30047 (US)
(74) Representative: Schoppe, Fritz, Dipl.-Ing.

(57) **Abstract**

An optical fiber product (10) comprises an optical fiber (12) through which optical signals can be transmitted. A primary coating (14) comprising a foam material surrounds the optical fiber (12). A secondary coating (16) surrounds the primary coating (14). At least one of the primary coating (14) and the secondary coating (16) protect the optical fiber (12) and resists microbending forces. A method of manufacture is also provided.

## Description

### TECHNICAL FIELD

The present invention is generally related to optical fiber coatings and, more particularly, is related to foamed optical fiber coatings and methods of manufacture.

### BACKGROUND OF THE INVENTION

Optical fibers are implemented in various applications, for example but not limited to, single and multiple fiber cables, ribbonized optical fiber cables, etc. During the manufacturing and deployment of fiber cables and the like, various forces and stresses are applied to the cladding and core structures of the optical fibers that make up the units within the cables.

An optical fiber comprises a core region imbedded within a cladding region, the composite of which may be described as a very thin thread or strand of light-transmitting medium. Typically, the optical medium is a substantially pure silica (SiO₂) glass, sometimes including small quantities of dopants, such as germania (GeO₂), added to the silica to alter the refractive index. While such materials have extremely high inherent strength they are easily damaged. More particularly, the surface of an optical fiber is fragile and susceptible to damage resulting in micron size flaws; therefore it is desirable to protect the fiber during manufacturing or use. Coating material is typically applied to the optical fiber as a liquid during the fiber draw operation, in order that the exposed surface of the fiber be protected immediately. It is preferable that the liquid coating material solidifies rapidly in order to allow the manufacturing process to continue at high speeds.

Optical fiber performance properties most affected by the coating material are strength and transmission loss caused by microbending. Because the optical fibers are thin and flexible, they are readily bent when subjected to mechanical stresses, such as those encountered during placement in a cable or when the cabled fiber is exposed to varying temperature environments or mechanical handling operations. If the stresses placed on the optical fiber result in a random bending distortion of the optical fiber core axis with periodic components in a critical range, light rays, or modes, propagating through the fiber may escape from the core. These microbending losses can be very large. Therefore, the optical fiber should be isolated from mechanical disturbances that cause microbending. The properties of the optical fiber coating material play a major role in providing this isolation.

Two layers of coating materials are typically applied to the optical fiber core. An inner layer, commonly referred to as the primary coating, is applied directly to the surface of the optical fiber cladding. An outer layer, commonly referred to as the secondary coating, is applied directly over the primary coating. It is preferable that the primary coating has a relatively low modulus and that the secondary coating has a relatively high modulus. The primary coating and the secondary coating are applied to the optical fiber either simultaneously or separately during the fiber drawing manufacturing operation.

The primary coating material and the secondary coating material are cured from the outside progressing inwardly toward the cladding surface of the optical fiber. The primary coating material and the secondary coating material typically comprise ultraviolet light curable materials, each material being characterized by a photoactive region. A photoactive region is that region of the light spectrum, which upon the absorption of curing light causes the coating material to change from a liquid phase to a solid phase.

With such materials, the modulus of the primary coating material can be affected by changing the inherent formulation chemistry or by adjusting operational curing parameters. For example, the modulus of the material can be reduced by reducing the degree of cross-linking, and hence, increasing the "cushioning" afforded the optical fiber, but continuing to reduce the cross-link density will result in reducing the robustness of the coating material itself. Modulus is typically altered by modifying the chemistry of the primary coating material. It is preferable that the "cushioning" afforded the optical fiber be increased without compromising the chemical make-up or further reducing the cross-link density, and therefore the robustness, of the material itself.

Thus, a heretofore unaddressed need exists in the industry to address the aforementioned deficiencies and inadequacies.

### SUMMARY OF THE INVENTION

Preferred embodiments provide an optical fiber product and a method of manufacture. Briefly described, in architecture, one embodiment of the apparatus can be implemented as follows. An optical fiber product comprises an optical fiber through which optical signals can be transmitted. A primary coating layer comprising a foam material surrounds the optical fiber. A secondary coating layer surrounds the primary layer. The coating layers protect the optical fiber and resist microbending forces.

Preferred embodiments can also be viewed as providing methods of manufacturing an optical fiber. In this regard, one embodiment of such a method, among others, can be broadly summarized by the following steps: providing an optical fiber through which optical signals can be transmitted; providing a primary coating material; providing an additive for combining with the primary coating material; and providing a secondary coating material.

The method further comprises: combining the additive with the primary coating material; applying the primary coating material to the optical fiber such that the primary coating surrounds the optical fiber; and applying the secondary coating material to the optical fiber surrounded by the primary coating material. At least one of the primary coating material and the secondary coating material is adapted to protect the optical fiber core and resist microbending forces.

Other systems, methods, features, and advantages will be or become apparent to one with skill in the art upon examination of the following drawings and detailed description. It is intended that all such additional systems, methods, features, and advantages be included within this description, be within the scope of this description, and be protected by the accompanying claims.

### BRIEF DESCRIPTION OF THE DRAWINGS

Many aspects of the invention can be better understood with reference to the following drawings. The components in the drawings are not necessarily to scale, emphasis instead being placed upon clearly illustrating the principles. Moreover, in the drawings, like reference numerals designate corresponding parts throughout the several views.
FIG. 1 illustrates a perspective view of an optical fiber.
FIG. 2 illustrates a cross-section view of the optical fiber illustrated in FIG. 1.
FIG. 3 illustrates a schematic of a manufacturing process.

### DETAILED DESCRIPTION OF THE PREFERRED EMBODIMENTS

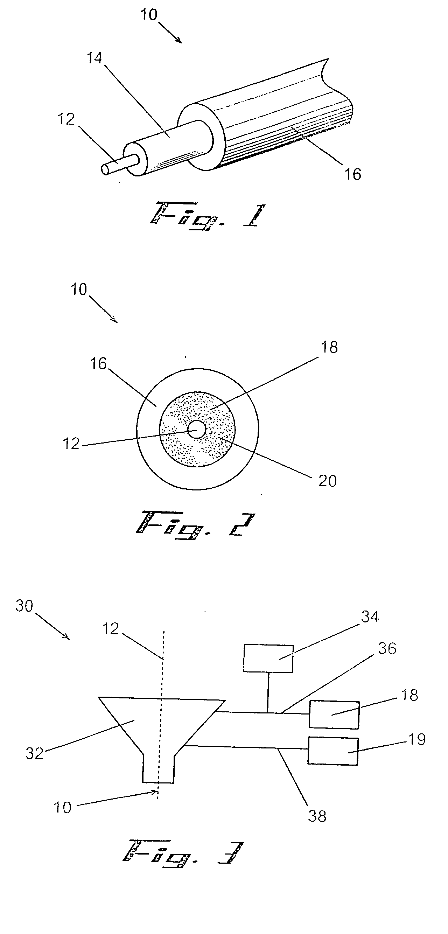

FIGs. 1 and 2 illustrate one preferred embodiment of an optical fiber product 10. The optical fiber product 10 can be implemented in a single fiber optical cable, multiple fiber optical cable, ribbon cable, etc. As illustrated, the optical fiber product 10 comprises an optical fiber 12, a primary coating layer 14, and a secondary coating layer 16. The optical fiber 12 preferably comprises a core region through which optical signals can be transmitted, and a cladding region. As one example, the optical fiber 12 can comprise a thin strand of light-transmitting silica. The silica may optionally include dopants capable of altering the refractive index of the silica.

The primary coating layer 14 preferably comprises a substantially foam-like material comprising a primary coating material 18 having a plurality of bubbles 20 dispersed throughout. The primary coating material 18 preferably produces enhanced microbend characteristics, thereby enabling the optical fiber product 10 to resist lateral forces encountered during the manufacturing and installation of the optical fiber product 10. Such materials include, but are not limited to, ultraviolet light curable acrylates, and materials exhibiting an increasing cross-link density as they cure. Voids, or bubbles 20, added to the primary coating material 18 result in reduction of the primary layer's modulus without affecting the cross-link density or the curing mechanism of the material 18 itself. For example, a preferred material may exhibit a cross-link density corresponding to a solid modulus of around 100 psi and a foam modulus of 50 psi. The foamed primary layer may range from 25 to 35 µm in thickness. The primary coating layer polymer can be an ultraviolet curable system with an unfoamed modulus of 50 to 500 psi. The bubbles 20, or voids, can be introduced to the primary coating material 18 by various methods.

In one embodiment, bubbles 20 are formed of various gases and can be introduced into the primary layer material 18 in various manners. A gas, such as nitrogen, oxygen, or the like, can be introduced to the primary coating material 18, resulting in a foaming of the material 18. When the foamed material cures or crosslinks the chemical make-up or the strength, or integrity, of the material 18 itself is unaffected. The bubbles 20 combined with the primary material 18 create a foam material having reduced modulus, as compared to a primary coating layer 14 comprising a substantially solid primary layer material, without decreasing cross-link density of the resulting polymer. Therefore, the robustness of the primary layer 14 remains relatively high. The bubbles 20 combined with the primary coating material 18 also result in the need for less volume of primary material 18 required to create a primary layer 14 than that needed to manufacture a primary layer 14 comprising solid primary layer material 18. Simply put, volume comprised of voids, or bubbles 20, is volume that does not need to be filled by solid material. For example, a 30% foam or void content will allow a 30% reduction in primary coating material used in the manufacture of the optical fiber product.

In another embodiment, bubbles 20 can also be formed in the primary coating material 18 by the introduction of a chemical blowing agent into the primary coating material 18. Various chemical agents can be added to the primary coating material 18, for example, such as AZO compounds like azodicarbonamide (also ABFA or azobisformamide) or other such similarly-behaving compounds which decompose to form gasses.

It is preferable that the gas-producing additive does not react with the primary coating material 18 since such reaction between the additive and the primary material 18 could result in changes in the cross-link density, or even premature and uncontrolled foaming. The creation of voids, or bubbles 20, in the primary layer material 18 occurs as a result of the decomposition of the chemical blowing agent generating gases such as nitrogen. The gas-producing reaction can occur at the introduction of the additive to the primary coating material 18, during the ultraviolet curing of the primary coating material 18, or at any suitable point during the manufacturing of the optical fiber product 10.

Bubbles 20 can also be created through the process of high pressure or super critical fluid (SCF) gas injection of a nominally gaseous material such as carbon dioxide (CO₂). Other gasses or gas mixtures may otherwise be appropriate additives for this purpose depending on the end product characteristics sought. In this particular example, the carbon dioxide is preferably under very high pressure as to be in a liquid state prior to its injection into and blending with the liquid primary coating material. It is preferable that the carbon dioxide blending operation with the coating prepolymer result in little or no effect on properties of the resulting primary coating material 18, such as to decrease the cross-link density. The pressurized carbon dioxide is introduced to the primary coating material 18 and dissolves or disperses uniformly within the prepolymer. The high pressure carbon dioxide mixture expands upon expulsion of the coating material from the die, creating bubbles or voids 20 in the primary coating material 18, or a foam-like material.

A nucleating agent can also be added to the primary coating material 18, where either a gas is introduced to the material or where a chemical reaction is used to generate the bubbles 20, such as with a chemical blowing agent. A preferred nucleating agent encourages uniformity in formation of the bubbles 20 with respect to both the size of the bubbles 20 themselves as well as the distribution of the bubbles 20 throughout the primary coating material 18. A preferred nucleating agent comprises an inorganic material, such as, for example, silica or titanium dioxide. It is preferable for the nucleating agent to have no effect on material properties of the primary coating material 18, such as, for example, the cross-link density, the strength of the glass, or the like.

A secondary layer 16 comprises a secondary coating material 19. It is preferable that the secondary layer 16 is substantially rigid in order to provide mechanical protection for the fiber product. The secondary layer 19 preferably comprises an ultraviolet curable polymer, or any suitable material for forming a substantially stiff exterior coating of modulus ranging from about 50,000 psi to about 150,000 psi. It is preferable that the secondary coating material be applied onto the optical fiber 12 as surrounded by the primary layer material 14, such as a primary layer material 14 disclosed above. The secondary coating material 19 hardens to form the substantially rigid exterior secondary layer 16 upon ultraviolet curing or at any time during the manufacturing process. It should be noted that the present disclosure is not limited to two layers, but that any suitable number of layers can be applied around the primary layer 14.

A preferred embodiment also includes methods for manufacturing an optical fiber 10. FIG. 3 illustrates an embodiment of a manufacturing method 30. The method 30 generally comprises a coating applicator 32, a primary coating material 18, a secondary coating material 19 and at least one additive 34, responsible for producing the foamed structure. The coating applicator 32 applies layers of coating to a bare optical fiber, such as the optical fiber 12 of the optical fiber product 10. The coating applicator 32 receives the optical fiber 12, the primary layer material 18, the secondary layer material 19 and preferably at least one additive 34. The additive 34 may also be pre-incorporated into the coating material in advance, so as to avoid the need to blend or mix the material on-line with the processing of the optical fiber product. It should be noted that the coating applicator 32 can apply the desired number of coatings onto the optical fiber 12, and is not limited to application of two coatings, as illustrated herein. The primary coating and secondary coating as applied to the optical fiber 12 are cured, solidified, or hardened.

In one embodiment, the primary layer 14 and a secondary layer 16 are applied to the optical fiber 12 in a wet-on-wet coating application process. In a wet-on-wet application process the primary coating material 18 is applied to the optical fiber 12 first. Before the primary coating material 18 is cured, solidified, or hardened, the secondary coating material 19 is applied around the primary coating material 18. After both the primary coating material 18 and the secondary coating material 19 are applied, both are cured, solidified, or hardened to form the coating layers of the optical fiber product 10.

In another embodiment, the primary layer 14 and the secondary layer 16 are applied to the optical fiber 12 in a wet-on-dry coating application process. In a wet-on-dry application process the primary coating material 18 is applied to the optical fiber 12 and cured, solidified, or hardened. After the primary coating material 18 is cured, the secondary coating material 19 is applied around the primary layer 14. The secondary coating material 18 is then cured, solidified, or hardened. It should be noted that although the wet-on-wet and wet-on-dry application processes are disclosed here, any suitable application process may be implemented.

The primary coating material 18 is preferably combined with an additive 34, as disclosed above. The mixture of primary coating material 18 and additive 34 is communicated to the coating applicator 32 through a primary coating material line 36. The mixture is applied to the optical fiber 12. The primary coating material 18 preferably comprises an ultraviolet curable material imparting a resistance to microbending to the optical fiber. Examples of such materials include but are not limited to ultraviolet curable acrylates, and the like.

The additive 34 can comprise any suitable material for creating bubbles 20 in the primary coating material 18, or foaming the primary coating material 18. Such materials can include but are not limited to, gas, such as nitrogen, air, carbon dioxide in a gaseous or super critical state, or the like. The additive 34 can also comprise a chemical capable of reacting to produce bubbles or voids throughout the material 18. The additive 34 can be introduced to the primary coating material 18 as the material 18 is introduced to the coating applicator 32 through the primary coating material line 36 during the manufacturing process (as illustrated in FIG. 3). Alternatively, the additive 34 can be added to the primary coating material 18 before the manufacturing process begins.

The mixture of primary coating material 18 and additive 34 expands as the bubbles 20 are created in the primary coating material 18 to create a "foam-like" material. The primary layer material 18 comprises the solid portions of the "foam-like" material. The bubbles 20, resulting from the presence of the additive 34 in the primary material 18, comprise the voids of the "foam-like" material. The primary coating material 18 - additive 34 combination expands as the additive 34 is introduced or after introduction of the additive 34. Expansion can also occur as the primary coating material 18 - additive 34 combination is communicated to the coating applicator 32 through the primary coating material line 36, in the coating applicator 32, or after the primary coating material 18 - additive 34 mixture is applied to the optical fiber 12. It is preferable, however, that a substantial portion of the expansion occurs prior to the application of subsequent layers, for example but not limited to the secondary layer 16, around the primary layer 14. The primary layer material 18 - additive 34 combination can also expand to a "foam-like" material during ultraviolet curing. The expanded primary coating material 18 as combined with the additive 34 and expanded to a "foam-like" material having a plurality of bubbles 20 dispersed throughout the material 18 forms the primary layer 14.

In another method, an optional nucleating agent is added to the primary coating material 18. The nucleating agent is preferably present in the primary coating material 18 prior to the application process. For example, the primary coating material 18 can be provided by a supplier of such materials containing the nucleating agent therein or the nucleating agent can be added to the primary coating material before the manufacturing process begins. It is at least preferable that the nucleating agent is present in the primary coating when the bubbles 20 are formed in the primary layer 14. The combined primary layer material 18 - additive 34 - nucleating agent mixture expands to form a substantially "foam-like" material resulting in the primary layer 14 as previously described. Expansion of the mixture can occur during various steps of the manufacturing process.

Secondary coating material 19 is communicated to the coating applicator 32 through a secondary coating material line 38. The secondary coating material 19 is applied to the optical fiber 12 as coated by the primary layer material 18 - additive 34 combination. The secondary coating material 19 is preferably introduced to the optical fiber product 10 after the primary coating material 18 - additive 34 combination is applied to the optical fiber 12. The secondary coating material 19 is introduced around the materials comprising the primary coating 18. As disclosed above, the application process can be a wet-on-wet application process, a wet-on-dry application process, or any suitable application process.

It should be emphasized that the above-described embodiments, particularly, any "preferred" embodiments, are merely possible examples of implementations, merely set forth for a clear understanding of the principles of the invention. Many variations and modifications may be made to the above-described embodiment(s) of the invention without departing substantially from the spirit and principles of the invention. All such modifications and variations are intended to be included herein within the scope of this disclosure and protected by the following claims.

Therefore, having thus described the invention, at least the following is claimed:

## Claims

1. A polymer coated optical fiber product (10) comprising:
an optical fiber (12) through which optical signals can be transmitted;
a primary coating layer (14) comprising a foam material, said primary coating layer (14) surrounding said optical fiber (12); and
a non-foamed secondary coating layer (16) surrounding said primary coating layer (14);
wherein the primary coating layer (14) and the secondary coating layer (16) protect said optical fiber (12) from damage and resists microbending forces.

2. The optical fiber product of claim 1, wherein said primary coating layer comprises bubbles disposed within a primary coating layer material.

3. The optical fiber product of claim 1, wherein said secondary coating layer comprises an ultraviolet light curable silicone acrylate material.

4. The optical fiber product of claim 1, wherein said secondary coating layer comprises a modulus being greater than a modulus comprising said primary coating layer.

5. An optical fiber product (10), comprising:
a means for transmitting optical signals (12);
an inner protection means (14) for protecting said signal transmission means (12), said inner protection means (14) being disposed around said signal transmission means ( 12);
a material reduction means (20) for reducing the mass of material comprising said inner protection means (14), said material reduction means (20) being combined with said inner protection means (14);
a non-foamed secondary protection means (16) for protecting said signal transmission means (12), said secondary protection means (16) being disposed around said inner protection means (14);
wherein the inner protection means (14) and the secondary protection means (16) resists microbending forces.

6. The optical fiber product of claim 5, wherein said inner protection means comprises a foam material.

7. A method of manufacturing an optical fiber product (10) comprising:
combining an additive (34) with a primary coating material (18);
applying said primary coating material (18) to an optical fiber (12) such that said primary coating material (18) surrounds said optical fiber (12);
applying a non-foamed secondary coating material (19) to said optical fiber (12) surrounded by said primary coating material (18);
wherein the primary coating material (18) and the secondary coating material (19) physically protect said optical fiber product and resist microbending forces.

8. The method of claim 7, further comprising:
allowing said additive combined with said primary coating material to become a foam material.

9. The method of claim 12, further comprising:
introducing a nucleating agent to said primary coating material.

10. The method of claim 7, wherein said combining said additive with said primary coating material comprises:
combining a chemical additive with said primary coating material; and
allowing an interaction between said chemical and said primary coating material.
